# EUROPEAN PATENT SPECIFICATION

(11) **EP 0 933 253 B1**
(45) Date of publication and mention of the grant of the patent: **18.06.2003**
(21) Application number: 99101626.2
(22) Date of filing: 03.02.1999
(51) Int. Cl.: B60Q 1/04

(54) **A device for positioning and securing a headlamp on a support structure of a vehicle**
Einstelleinrichtung und Befestigung eines Scheinwerfers auf einer Trägerstruktur
Dispositif de positionnement et de fixation d'un phare sur une structure de support de véhicule

(30) Priority: 03.02.1998 IT TO980082
(43) Date of publication of application: 04.08.1999
(73) Proprietor: Automotive Lighting Italia Spa, 10078 Venaria Reale (Torino) (IT)
(72) Inventor: Intimo, Bruno, 10045 Piossasco (IT); Padovan, Marco, 10036 Settimo Torinese (IT); Vagliera, Cristiano, 10093 Collegno (IT)
(74) Representative: Eccetto, Mauro

(56) References cited:
- EP-A- 0 620 137
- DE-A- 2 408 033
- DE-B- 1 755 157
- GB-A- 2 167 548
- US-A- 4 356 539

## Description

The present invention relates to a device for positioning and securing a headlamp on a support structure of a vehicle, in particular an automobile vehicle.

A device according to the preamble of claim 1 is known from DE-A- 24 08 033.

A known problem arises when, during the assembly of a headlamp on a front structure of the bodywork of an automobile vehicle, it is necessary to recover the relative positioning tolerances between this headlamp and other components of the bodywork, for instance the bumper, while at the same time eliminating any interference with the bodywork: the correct positioning of the headlamp and the elimination of any play poses a problem in particular in the direction transverse to the direction of travel of the vehicle, for instance to ensure correct profiling between the outer transparent cover of the headlamp and the mudguard (or other bodywork member disposed in a similar position).

Known headlamps are provided with semi-rigid fastening members provided with elongated slots making it possible to adjust the relative position of the headlamp with respect to the bodywork structure on which it is mounted, before it is finally secured using threaded rods: solutions of this type, however, allow only a partial recovery of the tolerances in the transverse direction and also require complex manual assembly operations, particularly during the housing of the headlamp in the bodywork.

The object of the present invention is to provide a device for positioning and securing a vehicle headlamp which is free from these drawbacks: an object of the invention is in particular to provide a device which enables the headlamp to be correctly positioned on a structure of the vehicle bodywork and in particular ensures the recovery of the assembly tolerances in the direction transverse to the direction of travel of the vehicle, thereby ensuring, among other things, correct profiling of the outer transparent cover of the headlamp with any other components of the bodywork (for instance the mudguard), and which also enables simple and rapid assembly at least some steps of which can be carried out automatically.

The present invention therefore relates to a device for positioning and securing a headlamp on a support structure of a vehicle according to claim 1.

The positioning and securing device of the invention enables correct positioning of the headlamp on a structure of the vehicle bodywork and ensures, in particular, the recovery of the assembly tolerances in the direction transverse to the direction of travel of the vehicle, thereby ensuring, among other things, correct profiling of the outer transparent cover of the headlamp with any other components of the bodywork (for instance the mudguard) and significantly reducing or completely eliminating any interference of the headlamp body with other bodywork components, for instance the bonnet, due to assembly that is not entirely correct; the device of the invention is also simple and economic to produce and enables simple and rapid assembly of the headlamp, some steps of which can also be carried out automatically.

The device of the invention also makes it possible to achieve a particularly pleasing aesthetic effect, in particular by ensuring continuity of line between the outer transparent cover of the headlamp and other components of the bodywork; the number of components is also reduced in comparison with known devices having similar functions with the result that the cost of the device is also reduced.

Further characteristic features and advantages of the present invention are set out in the following description of a non-limiting embodiment thereof, made with reference to the accompanying drawings, in which:
Fig. 1 is a diagrammatic view in front elevation and partly in cross-section of a headlamp of an automobile vehicle provided with a positioning and securing device of the present invention;
Fig. 2 is a diagrammatic view in cross-section through the headlamp of Fig. 1;
Figs. 3 and 4 are diagrammatic views in cross-section through two enlarged details of the device of the invention.

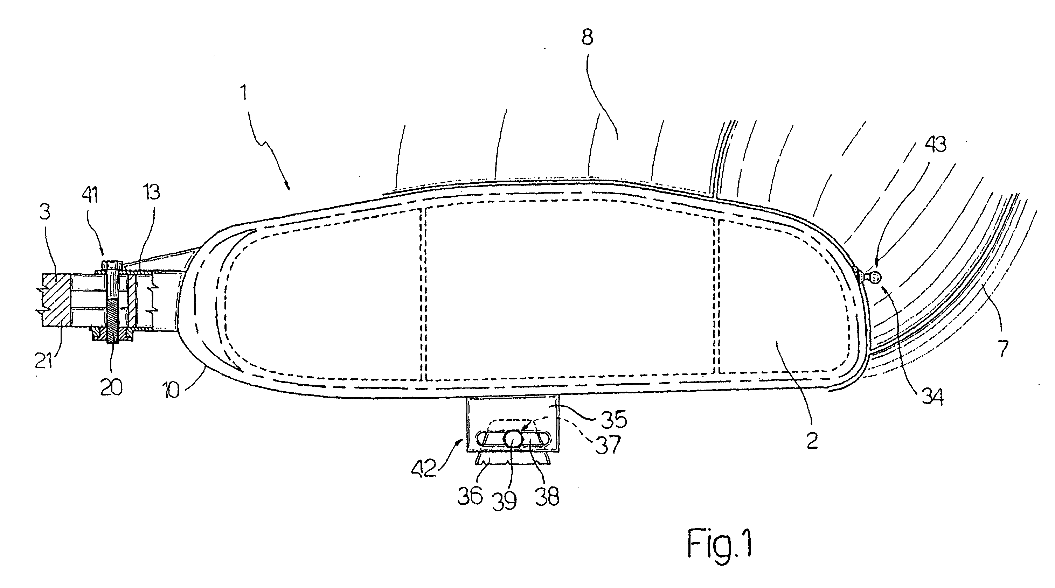

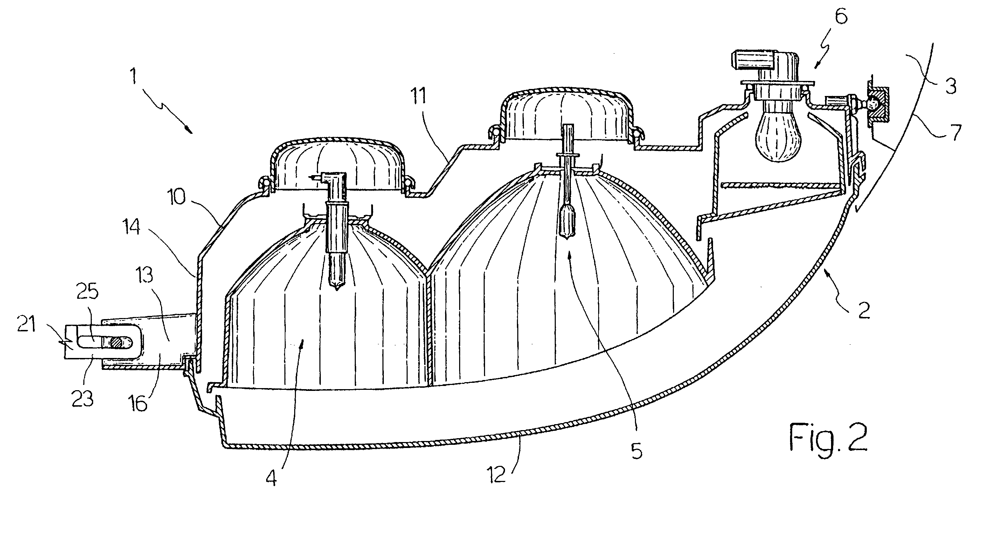

In Figs. 1 to 4, a device for positioning and securing a headlamp 2 on a support structure of a vehicle 3 (not shown in its entirety for simplicity) is shown overall by 1; in the non-limiting embodiment shown, the headlamp 2 is a left-hand front lighting unit of an automobile vehicle incorporating a parking light 4, a long-distance beam 5 and a direction indicator 6 (shown diagrammatically in Fig. 2); the headlamp 2 is disposed, as shown in Fig. 1 (again diagrammatically and not to scale) alongside a mudguard 7 and below a bonnet 8 of the vehicle. The support structure 3 on which the headlamp 2 is mounted may comprise, for instance, one or more members of the vehicle bodywork, possibly including the mudguard 7.

The headlamp 2, of substantially known type, comprises a main body 10 of any shape, within which the various internal lighting members, also known, are housed, for instance the light sources, reflectors, electrical connections, etc., which are shown only partially and diagrammatically in Fig. 2.

With particular reference to Fig. 2, the main body 10 of the headlamp 2 in turn comprises a substantially concave, rigid housing 11 and a cover 12 of transparent material which closes the housing 11 at the front: the cover 12 has, towards the exterior of the vehicle, a profile which continuously follows the profile of an adjacent bodywork member, for instance the mudguard 7, in order to obtain a particularly pleasing aesthetic effect.

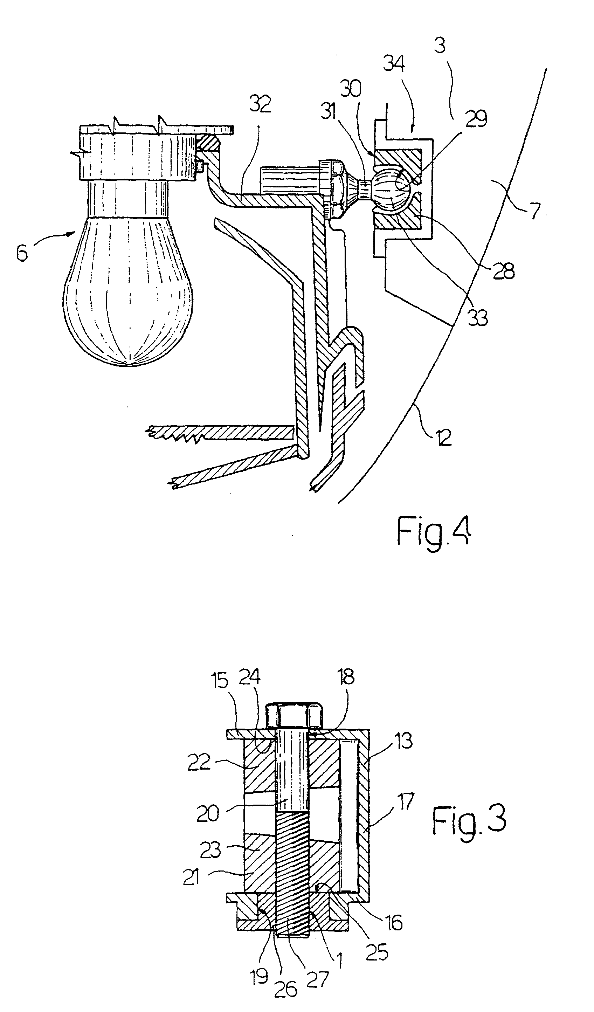

With particular reference to Fig. 3, the main body 10 of the headlamp 2 is provided with a fork member 13 which extends in a snap-locking manner from an end portion 14 of the housing 11 in a direction transverse to the direction of travel of the vehicle, towards the interior of this vehicle: the fork member 13, rigid with the main body 10 of the headlamp 2, has a pair of arms 15, 16 facing one another that extend in a snap-locking manner from a common root portion 17 connected rigidly to the housing 11; the arms 15, 16 are provided with respective holes 18, 19 that are aligned so that a locking rod 20 can be inserted through them.

At the location of the fork member 13, the support structure 3 is provided, on the inner side of the vehicle, with a projection 21 which extends in a snap-locking manner from this structure, in the direction transverse to the direction of the travel of the vehicle, towards the main body 10 of the headlamp 2: according to the preferred, non-limiting, embodiment shown in Figs. 1, 2 and 3, the projection 21 is also fork-shaped and has two substantially plane and parallel arms 22, 23 facing one another at a predetermined distance from one another: the two arms 22, 23 are provided with respective slots 24, 25 which are aligned and elongated in the direction transverse to the direction of travel of the vehicle.

The projection 21, borne rigidly by the support structure 3, is partially inserted between the arms 15, 16 of the fork member 13 and the locking rod 20 is disposed through the holes 18, 19 of the fork member 13 and through the slots 24, 25 of the projection 21 which are all aligned such that they are at least partially superimposed in the vertical direction.

In this way, the fork member 13 and the projection 21 substantially form a pair of members articulated with one another and rigid with the main body 10 of the headlamp 2 and the support structure 3 of the vehicle respectively.

The lower arm 16 of the fork member 13 bears an internally threaded ring nut 26 rigid with the fork member 13 and the locking rod 20 is provided with a threaded end 27 (for instance with a metric thread) adapted internally to engage the ring nut 26 in order to clamp the fork member 13 and the projection 21 (which members are otherwise articulated with one another) against one another, locking them in a relative position of use, as will be explained below.

With particular reference to Fig. 4, the support structure 3 is further provided, on the outer side of the vehicle, for instance on an inner portion of the mudguard 7, with a pre-assembled block 28, made for instance from a relatively rigid polymer material, provided with a spherical seat 29 having an elastically deformable entry edge 30.

At the location of the block 28, the headlamp 2 is provided with a support pin 31 which extends in a snap-locking manner from an end portion 32 of the housing 11 substantially opposite the end portion 14 provided with the fork member 13; the pin 31 extends in the direction transverse to the direction of travel of the vehicle and towards the exterior of the vehicle and is provided with a spherical head 33 housed in the spherical seat 29 of the block 28 in order to form a ball joint 34.

The coupling of the spherical head 33 and the spherical seat 29, providing the ball joint 34, allows the main body 10 of the headlamp 2 to rotate about a fulcrum point of the ball joint 34 while it substantially prevents the translation of the main body 10 of the headlamp 2 with respect to the support structure 3 of the vehicle.

With particular reference to Fig. 1 again, the device 1 further comprises a pair of members 35, 36 sliding reciprocally with respect to one another and rigid with the main body 10 of the headlamp 2 and the support structure 3 respectively; the member 36, rigid with the support structure 3, is provided with a threaded seat 37, while the member 35, rigid with the main body 10 of the headlamp 2, is provided with a through slot 38, elongated in the direction transverse to the direction of travel of the vehicle: a locking screw 39 is inserted through the slot 38 and engages the threaded seat 37.

During assembly, the headlamp 2 is initially disposed on the support structure 3 by inserting the projection 21 of the support structure 3 between the arms 15, 16 of the fork member 13 and then the rod 20 through the holes 18, 19 of this fork member 13 and the slots 24, 25 of the projection 21 until it engages the ring nut 26, but is not locked on the latter: the main body 10 of the headlamp is thus connected to the support structure 3 but can rotate with respect thereto about an axis of rotation defined by a longitudinal axis of the rod 20 which, in this case, is substantially vertical: the main body 10 of the headlamp 2 may therefore rotate with respect to the support structure 3 parallel to a horizontal plane.

The headlamp 2 is connected at this point to the support structure 3 at a first connection point 41 formed by the coupling of the reciprocally articulated fork member 13 and projection 21.

The headlamp 2, at this stage of assembly, further retains, as a result of the slots 24, 25, the possibility of translation in a predetermined direction of translation, and in this case in a direction transverse to the direction of travel of the vehicle, parallel to the horizontal plane: according to the preferred embodiment shown in Figs. 1 and 2, this direction of translation is also parallel to a longitudinal axis of the main body 10 of the headlamp 2.

It is thus possible to rotate the main body 10 of the headlamp 2 about the rod 20 and to move it in translation in the above-mentioned direction of translation to bring it into the correct assembly position, recovering any positioning tolerances along the transverse axis of the vehicle and ensuring, among other things, that the cover 12 and the mudguard 7 are correctly profiled.

Once the slot 38 of the member 35 is aligned with the threaded seat 37 of the support structure 3, the screw 39 is inserted therethrough, but is again not completely tightened, thus connecting the headlamp 2 to the support structure 3 at a second connection point 42 corresponding to the pair of reciprocally sliding members 35, 36: the presence of the slot 38 further maintains the possibility of translation of the main body 10 with respect to the structure 3.

At this point it is possible to snap lock, on the outer side of the vehicle, the main body 10 of the headlamp 2 on the support structure 3 by coupling the spherical head 33 with the relative spherical seat 29 and by forcing the elastically deformable entry edge 30 thereof, so as to form a third point of connection 43 of the headlamp 2 to the support structure 3.

The assembly of the headlamp 2 on the support structure 3 is completed by permanent locking of the rod 20 on the ring nut 26 and the screw 39 in its relative seat 37.

It will be appreciated that it is also possible, once the headlamp 2 has been coupled to the support structure 3 at the first connection point 41, to reverse the order in which the subsequent stages of assembly at the connection points 42 and 43 are carried out, i.e. first to insert and snap lock the spherical head 33 in its relative spherical housing 29 and then to fasten the pair of sliding members 35, 36. These are in any case extremely simple and rapid operations: the performance of these operations optimally adjusts the relative position of the headlamp 2 and the support structure 3 and may be carried out by a skilled worker: in contrast, the initial stage of pre-assembly of the headlamp at the connection point 41 does not require careful adjustment and may also be carried out automatically.

It is also possible to provide the headlamp 2 and the projection 21 as a single pre-assembled unit, already reciprocally connected by the rod 20 and the relative ring nut 26: the projection 21 will in this case be shaped such that it can subsequently be secured, in any known manner (for instance by snap locking or by locking screws) to the support structure 3: in this case, during assembly, it is not necessary to insert the projection 21 into the fork member 13 and subsequently to insert the rod 20 into the holes 18, 19 and the slots 24, 25.

According to a possible variant (not shown), the slots 24, 25 of the projection 21 (borne rigidly by the support structure 3) could be open and have one of their ends facing the headlamp 2: in this way, having already inserted the rod 20 through the holes 18, 19 of the fork member 13 and into the ring nut 26, it is possible directly to insert the rod 20 into the open slots 24, 25 and then to carry out the same assembly steps as described above.

It is evident that the device described above can be modified and varied in many other ways without thereby departing from the scope of the claims.

## Claims

1. A device (1) for positioning and securing a headlamp (2) on a support structure (3) of a vehicle, comprising means for the relative positioning of a main body (10) of the headlamp (2) with respect to the support structure (3) and locking means adapted to lock the main body (10) of the headlamp (2) in a predetermined position with respect to the support structure (3); the device having three connection points (41, 42, 43) and comprising first means (13, 20, 21) for the relative positioning of the main body (10) of the headlamp (2) with respect to the support structure (3), disposed at the location of a first (41) of said three connection points (41, 42, 43) and adapted to enable the rotation and simultaneous translation of the main body (10) of the headlamp (2) with respect to the support structure (3), the rotation taking place about a predetermined axis of rotation and the translation taking place in a predetermined direction of translation substantially at right angles to the axis of rotation, while said direction of translation is transverse to the direction of travel of the vehicle ; the device being **characterised in that** said axis of rotation is substantially vertical, **and in that** the main body (10) may rotate with respect to the support structure (3) parallel to a horizontal plane.

2. A device as claimed in claim 1, **characterised in that** it further comprises second means (35, 36, 39) for the relative positioning of the main body (10) of the headlamp (2) with respect to the support structure (3) disposed at the location of a second (42) of the three connection points (41, 42, 43) and adapted to allow the main body (10) to move in translation in the said direction of translation.

3. A device as claimed in claim 2, **characterised in that** it further comprises third means (29, 33) for the relative positioning of the main body (10) of the headlamp (2) with respect to the support structure (3) disposed at the location of a third (43) of the three connection points (41, 42, 43) and in turn comprising a ball joint (34) which allows the main body (10) of the headlamp (2) to rotate about a fulcrum point of this ball joint (34) and substantially prevents the translation of the main body (10) of the headlamp (2) with respect to the support structure (3).

4. A device as claimed in one of the preceding claims, **characterised in that** the direction of translation is substantially parallel to a longitudinal axis of the main body (10) of the headlamp (2).

5. A device as claimed in one of the preceding claims, **characterised in that** the first relative positioning means comprise two members (13, 21) articulated with one another and rigid with the main body (10) of the headlamp (2) and the support structure (3) respectively, these articulated members (13, 21) being provided with respective seats (17, 18; 24, 25) which are aligned with one another and within which a locking rod (20) is inserted.

6. A device as claimed in claim 5, **characterised in that** a first (13) of these articulated members (13, 21), rigid with the main body (10) of the headlamp (2), is fork-shaped and comprises a pair of arms (15, 16) facing one another which extend in a snap locking manner from a common root portion (17), these arms (15, 16) being provided with respective holes (18, 19) which are aligned with one another so that the locking rod (20) can be inserted therethrough, and **in that** a second (21) of these articulated members (13, 21), borne rigidly by the support structure (3), is at least partially inserted between the arms (15, 16) and is provided with at least a first through slot (24, 25) elongated in the direction of translation, the locking rod (20) being disposed to pass through the holes (18, 19) and through at least a first slot (24, 25).

7. A device as claimed in claim 5 or 6, **characterised in that** one (16) of the arms (15, 16) of this first articulated member (13) bears an internally threaded ring nut (26) rigid with this first articulated member (13), the locking rod (20) being provided with a threaded end (27) adapted internally to engage the ring nut (26) in order to lock the articulated members (13, 21) against one another.

8. A device as claimed in one of claims 5 to 7, **characterised in that** the second articulated member (21) is also substantially fork-shaped and has arms (22, 23) facing one another and provided with respective first slots (24, 25) aligned with one another and elongated in the direction of translation.

9. A device as claimed in one of claims 3 to 8, **characterised in that** the second relative positioning means comprise a pair of members (35, 36) sliding reciprocally with respect to one another and rigid with the main body (10) of the headlamp (2) and the support structure (3) respectively and a locking screw (39), a first (36) of these reciprocally sliding members (35, 36), rigid with the support structure (3), being provided with a threaded seat (37), a second (35) of these reciprocally sliding members (35, 36), rigid with the main body (10) of the headlamp (2), being provided with a second through slot (38) elongated in the direction of translation, the locking screw (39) being disposed to pass through the second slot (38) and engaging the threaded seat (37) in order to lock the pair of reciprocally sliding members (35, 36) against one another.

10. A device as claimed in one of claims 3 to 9, **characterised in that** the third relative positioning means comprise a support pin (31) which extends in a snap-locking manner from an end portion (32) of the main body (10) of the headlamp (2) and is provided with a spherical head (33), and a block (28) of polymer material, rigid with the support structure (3) and provided with a spherical head (29) having an elastically deformable entry edge (30) and **in that** the spherical head (33) of the support pin (31) can be housed in a snap locking manner in the spherical seat (29) of the block (28) to form the ball joint (34).

11. A headlamp (2) for a vehicle, **characterised in that** it is provided with at least one positioning and securing device (1) according to any one of the preceding claims.

12. A headlamp (2) for a vehicle, provided with at least one positioning and securing device (1) according to any one of claims 5 to 11, **characterised in that** the first relative positioning means comprises a pre-assembled unit of the two members (13, 21) articulated with one another, these articulated members (13, 21) being reciprocally connected by the locking rod (20) and **in that** one (21) of these articulated members (13, 21) is provided with its own means of connection to the support structure (3).

## Patentansprüche

1. Vorrichtung (1) zum Positionieren und Befestigen eines Scheinwerfers (2) an einer Unterstützungsstruktur (3) eines Fahrzeugs, die Mittel, die einen Hauptkörper (10) des Scheinwerfers (2) in bezug auf die Unterstützungsstruktur (3) relativ positionieren, und Verriegelungsmittel, die den Hauptkörper (10) des Scheinwerfers (2) an einer vorgegebenen Position in bezug auf die Unterstützungsstruktur (3) verriegeln können, umfaßt; wobei die Vorrichtung drei Verbindungspunkte (41, 42, 43) besitzt und erste Mittel (13, 20, 21) zum relativen Positionieren des Hauptkörpers (10) des Scheinwerfers (2) in bezug auf die Unterstützungsstruktur (3), die am Ort eines ersten (41) der drei Verbindungspunkte (41, 42, 43) angeordnet sind und die Drehung sowie die gleichzeitige Translation des Hauptkörpers (10) des Scheinwerfers (2) in bezug auf die Unterstützungsstruktur (3) ermöglichen können, umfaßt, wobei die Drehung um eine vorgegebene Drehachse erfolgt und die Translation in einer vorgegebenen Translationsrichtung im wesentlichen rechtwinklig zu der Drehachse erfolgt, wobei die Translationsrichtung quer zur Fahrtrichtung des Fahrzeugs verläuft, wobei die Vorrichtung **dadurch gekennzeichnet ist, daß** die Drehachse im wesentlichen vertikal ist, und daß sich der Hauptkörper (10) in bezug auf die Unterstützungsstruktur (3) parallel zu einer horizontalen Ebene drehen kann.

2. Vorrichtung nach Anspruch 1, **dadurch gekennzeichnet, daß** sie ferner zweite Mittel (35, 36, 39) für die relative Positionierung des Hauptkörpers (10) des Scheinwerfers (2) in bezug auf die Unterstützungsstruktur (3) umfaßt, die am Ort eines zweiten (42) der drei Verbindungspunkte (41, 42, 43) angeordnet sind und dem Hauptkörper (10) eine translatorische Bewegung in der Translationsrichtung ermöglichen.

3. Vorrichtung nach Anspruch 2, **dadurch gekennzeichnet, daß** sie ferner dritte Mittel (29, 30) für die relative Positionierung des Hauptkörpers (10) des Scheinwerfers (2) in bezug auf die Unterstützungsstruktur (3) umfaßt, die am Ort eines dritten (43) der drei Verbindungspunkte (41, 42, 43) angeordnet sind und ihrerseits ein Kugelgelenk (34) umfassen, das dem Hauptkörper (10) des Scheinwerfers (2) eine Drehung um einen Drehpunkt dieses Kugelgelenks (34) ermöglicht und die Translation des Hauptkörpers (10) des Scheinwerfers (2) in bezug auf die Unterstützungsstruktur (3) im wesentlichen verhindert.

4. Vorrichtung nach einem der vorhergehenden Ansprüche, **dadurch gekennzeichnet, daß** die Translationsrichtung zu einer Längsachse des Hauptkörpers (10) des Scheinwerfers (2) im wesentlichen parallel ist.

5. Vorrichtung nach einem der vorhergehenden Ansprüche, **dadurch gekennzeichnet, daß** die ersten Relativpositionierungsmittel zwei Elemente (13, 21) umfassen, die aneinander angelenkt und mit dem Hauptkörper (10) des Scheinwerfers (2) bzw. mit der Unterstützungsstruktur (3) starr verbunden sind, wobei diese angelenkten Elemente (13, 21) mit jeweiligen Sitzen (17, 18; 24, 25) versehen sind, die aufeinander ausgerichtet sind und in die eine Verriegelungsstange (20) eingeführt ist.

6. Vorrichtung nach Anspruch 5, **dadurch gekennzeichnet, daß** ein erstes (13) dieser angelenkten Elemente (13, 21), das mit dem Hauptkörper (10) des Scheinwerfers (2) starr verbunden ist, gabelförmig ist und ein Paar Arme (15, 16) umfaßt, die einander zugewandt sind und sich in der Art einer Einrastverriegelung von einem gemeinsamen Wurzelabschnitt (17) erstrecken, wobei diese Arme (15, 16) mit jeweiligen Löchern (18, 19) versehen sind, die aufeinander ausgerichtet sind, so daß die Verriegelungsstange (20) in sie eingeschoben werden kann, und daß ein zweites dieser angelenkten Elemente (13, 21), das von der Unterstützungsstruktur (3) starr getragen wird, wenigstens teilweise zwischen die Arme (15, 16) eingeschoben ist und mit wenigstens einem in Translationsrichtung langgestreckten Durchgangsschlitz (24, 25) versehen ist, wobei die Verriegelungsstange (20) so angeordnet ist, daß sie durch die Löcher (18, 19) und durch wenigstens einen Schlitz (24, 25) verläuft.

7. Vorrichtung nach Anspruch 5 oder 6, **dadurch gekennzeichnet, daß** einer (16) der Arme (15, 16) dieses ersten angelenkten Elements (13) eine Ringmutter (26) mit Innengewinde trägt, die mit diesem ersten angelenkten Element (13) starr verbunden ist, wobei die Verriegelungsstange (20) mit einem Gewindeende (27) versehen ist, das mit der Ringmutter (26) innen in Eingriff gelangen kann, um die verriegelten Elemente (13, 21) aneinander zu verriegeln.

8. Vorrichtung nach einem der Ansprüche 5 bis 7, **dadurch gekennzeichnet, daß** das zweite angelenkte Element (21) ebenfalls im wesentlichen gabelförmig ist und zwei Arme (22, 23) besitzt, die einander zugewandt sind und mit jeweiligen ersten Schlitzen (24, 25) versehen sind, die aufeinander ausgerichtet und in Translationsrichtung langgestreckt sind.

9. Vorrichtung nach einem der Ansprüche 3 bis 8, **dadurch gekennzeichnet, daß** die zweiten Relativpositionierungsmittel ein Paar Elemente (35, 36), die in bezug aufeinander hin und her gleiten können und mit dem Hauptkörper (10) des Scheinwerfers (2) bzw. mit der Unterstützungsstruktur (3) starr verbunden sind, sowie eine Verriegelungsschraube (39) umfassen, wobei ein erstes (36) dieser hin und her gleitenden Elemente (35, 36), das mit der Unterstützungsstruktur (3) starr verbunden ist, mit einem Gewindesitz (37) versehen ist, ein zweites (35) dieser hin und her gleitenden Elemente (35, 36), das mit dem Hauptkörper (10) des Scheinwerfers (2) starr verbunden ist, mit einem zweiten Durchgangsschlitz (38) versehen ist, der in Translationsrichtung langgestreckt ist, und die Verriegelungsschraube (39) so angeordnet ist, daß sie durch den zweiten Schlitz (38) verläuft und mit dem Gewindesitz (37) in Eingriff gelangt, um das Paar hin und her gleitender Elemente (35, 36) aneinander zu verriegeln.

10. Vorrichtung nach einem der Ansprüche 3 bis 9, **dadurch gekennzeichnet, daß** die dritten Relativpositionierungsmittel einen Unterstützungsstift (31), der sich in der Art einer Einrastvertiegelung von einem Endabschnitt (32) des Hauptkörpers (10) des Scheinwerfers (2) erstreckt und mit einem sphärischen Kopf (33) versehen ist, und einen Block (28) aus einem Polymerwerkstoff, der mit der Unterstützungsstruktur (3) starr verbunden ist und mit einem sphärischen Kopf (29) mit einer elastisch verformbaren Eintrittskante (30) versehen ist, umfassen und daß der sphärische Kopf (33) des Unterstützungsstifts (31) in der Art einer Einrastverriegelung in dem sphärischen Sitz (29) des Blocks (28) eingesetzt werden kann, um das Kugelgelenk (34) zu bilden.

11. Scheinwerfer (2) für ein Fahrzeug, **dadurch gekennzeichnet, daß** er mit wenigstens einer Positionierungs- und Befestigungsvorrichtung (1) nach einem der vorhergehenden Ansprüche versehen ist.

12. Scheinwerfer (2) für ein Fahrzeug, der mit wenigstens einer Positionierungs- und Befestigungsvorrichtung (1) nach einem der Ansprüche 5 bis 11 versehen ist, **dadurch gekennzeichnet, daß** die ersten Relativpositionierungsmittel eine vormontierte Einheit der beiden Elemente (13, 21), die aneinander angelenkt sind, umfassen, wobei diese angelenkten Elemente (13, 21) durch die Verriegelungsstange (10) so verbunden sind, daß sie hin und her bewegt werden können, und daß eines (21) dieser angelenkten Elemente (13, 21) mit seinen eigenen Mitteln zur Verbindung mit der Unterstützungsstruktur (3) versehen ist.

## Revendications

1. Dispositif (1) destiné à positionner et fixer un phare (2) sur une structure de support (3) d'un véhicule, comprenant un moyen pour le positionnement relatif d'un corps principal (10) du phare (2) par rapport à la structure de support (3) et un moyen de verrouillage adapté pour verrouiller le corps principal (10) du phare (2) dans une position prédéterminée par rapport à la structure de support (3) ; le dispositif ayant trois points de connexion (41, 42, 43) et comprenant des premiers moyens (13, 20, 21) pour le positionnement relatif du corps principal (10) du phare (2) par rapport à la structure de support (3), disposés à l'emplacement d'un premier (41) desdits trois points de connexion (41, 42, 43) et adaptés pour permettre la rotation et la translation simultanée du corps principal (10) du phare (2) par rapport à la structure de support (3), la rotation ayant lieu autour d'un axe de rotation prédéterminé et la translation ayant lieu dans une direction de translation prédéterminée substantiellement à angle droit par rapport à l'axe de rotation, tandis que ladite direction de translation est transversale à la direction d'avance du véhicule ; le dispositif étant **caractérisé en ce que** ledit axe de rotation est substantiellement vertical et **en ce que** le corps principal (10) peut tourner par rapport à la structure de support (3) parallèlement à un plan horizontal.

2. Dispositif selon la revendication 1, **caractérisé en ce qu'**il comprend en outre des deuxièmes moyens (35, 36, 39) pour le positionnement relatif du corps principal (10) du phare (2) par rapport à la structure de support (3) disposés à l'emplacement d'un deuxième (42) des trois points de connexion (41, 42, 43) et adaptés pour permettre au corps principal (10) de se déplacer en translation dans ladite direction de translation.

3. Dispositif selon la revendicatior. 2, **caractérisé en ce qu'**il comprend en outre des troisièmes moyens (29, 33) pour le positionnament relatif du corps principal (10) du phare (2) par rapport à la structure de support (3), disposés à l'emplacement d'un troisième (43) des trois points de connexion (41, 42, 43) et comprenant à leur tour une rotule (34) qui permet au corps principal (10) du phare (2) de tourner autour d'un pivot de cette rotule (34) et empêche substantiellement la translation du corps principal (10) du phare (2) par rapport à la structure de support (3).

4. Dispositif selon l'une quelconque des revendications précédentes, **caractérisé en ce que** la direction de translation est substantiellement parallèle à un axe longitudinal du corps principal (10) du phare (2).

5. Dispositif selon l'une quelconque des revendications précédentes, **caractérisé en ce que** les premiers moyens de positionnement relatif comprennent deux organes (13, 21) articulés l'un à l'autre et fixés rigidement au corps principal (10) du phare (2) et à la structure de support (3) respectivement, ces organes articulés (13, 21) étant pourvus de sièges respectifs (17, 18 ; 24, 25) qui sont alignés l'un avec l'autre et dans lesquels est insérée une tige de verrouillage (20).

6. Dispositif selon la revendication 5, **caractérisé en ce qu'**un premier (13) de ces organes articulés (13, 21), fixé rigidement au corps principal (10) du phare (2), est en forme de fourche et comprend une paire de bras (15, 16) en regard l'un de l'autre, qui s'étendent de manière à se verrouiller par encliquetage depuis une portion de base commune (17), ces bras (15, 16) étant pourvus de trous respectifs (18, 19) qui sont alignés l'un avec l'autre de sorte que la tige de verrouillage (20) puisse être insérée à travers eux, et **en ce qu'**un deuxième (21) de ces organes articulés (13, 21), porté rigidement par la structure de support (3), est au moins partiellement inséré entre les bras (15, 16) et est pourvu d'au moins une première fente traversante (24, 25) allongée dans la direction de translation, la tige de verrouillage (20) étant disposée de façon à passer à travers les trous (18, 19) et à travers au moins une première fente (24, 25).

7. Dispositif selon la revendication 5 ou 6, **caractérisé en ce qu'**un (16) des bras (15, 16) de ce premier organe articulé (13) porte un alésage annulaire filetée intérieurement (26), fixée rigidement à ce premier organe articulé (13), la tige de verrouillage (20) étant pourvue d'une extrémité filetée (27) prévue pour s'engager intérieurement dans l'alésage annulaire (26) afin de verrouiller les organes articulés (13, 21) l'un contre l'autre.

8. Dispositif selon l'une quelconque des revendications 5 à 7, **caractérisé en ce que** le deuxième organe articulé (21) est également substantiellement en forme de fourche et a des bras (22, 23) en regard l'un de l'autre et pourvus de premières fentes respectives (24, 25) alignées l'une à l'autre et allongées dans la direction de translation.

9. Dispositif selon l'une quelconque des revendications 3 à 8, **caractérisé en ce que** les deuxièmes moyens de positionnement relatif comprennent une paire d'organes (35, 36) coulissant réciproquement l'un par rapport à l'autre et fixés rigidement au corps principal (10) du phare (2) et à la structure de support (3) respectivement, et une vis de verrouillage (39), un premier (36) de ces organes coulissant réciproquement (35, 36), fixé rigidement à la structure de support (3), étant pourvu d'un siège fileté (37), un deuxième (35) de ces organes coulissant réciproquement (35, 36), fixé rigidement au corps principal (10) du phare (2), étant pourvu d'une deuxième fente traversante (38) allongée dans la direction de translation, la vis de verrouillage (39) étant disposée de façon à traverser la deuxième fente (38) et engager le siège fileté (37) afin de verrouiller la paire d'organes coulissant réciproquement (35, 36) l'un contre l'autre.

10. Dispositif selon l'une quelconque des revendications 3 à 9, **caractérisé en ce que** les troisièmes moyens de positionnement relatif comprennent une broche de support (31) qui s'étend de manière à se verrouiller par encliquetage depuis une portion d'extrémité (32) du corps principal (10) du phare (2) et est pourvue d'une tête sphérique (33), et un bloc (28) de matériau polymère, fixé rigidement à la structure de support (3) et pourvu d'une tête sphérique (29) ayant d'un bord d'entrée déformable élastiquement (30) et **en ce que** la tête sphérique (33) de la broche de support (31) peut être logée de manière à se verrouiller par encliquetage dans le siège sphérique (29) du bloc (28) pour former la rotule (34).

11. Phare (2) pour un véhicule, **caractérisé en ce qu'**il est pourvu d'au moins un dispositif de positionnement et de fixation (1) selon l'une quelconque des revendications précédentes.

12. Phare (2) pour un véhicule, pourvu d'au moins un dispositif de positionnement et de fixation (1) selon l'une quelconque des revendications 5 à 11, **caractérisé en ce que** le premier moyen de positionnement relatif comprend une unité pré-assemblée des deux organes (13, 21) articulés l'un à l'autre, ces organes articulés (13, 21) étant connectés réciproquement par la tige de verrouillage (20) et **en ce qu'**un (21) de ces organes articulés (13, 21) est pourvu de son propre moyen de connexion à la structure de support (3).
